# EUROPEAN PATENT APPLICATION

(11) **EP 1 806 217 A1**
(43) Date of publication of application: **11.07.2007**
(21) Application number: 07000269.6
(22) Date of filing: 08.01.2007
(51) Int. Cl.: B29C 44/08, B29C 44/34, B29C 44/58

(54) **Molding method and apparatus for making a resin foam molded article**

(30) Priority: 10.01.2006 JP 2006002594; 02.10.2006 JP 2006270880
(71) Applicant: Mazda Motor Corporation, Aki-gun, Hiroshima 730-8670 (JP)
(72) Inventor: Kaneko, Mitsuharu, Aki-gun Hiroshima 730-8670 (JP); Tochioka, Takahiro, Aki-gun Hiroshima 730-8670 (JP); Ogawa, Junuchi, Aki-gun Hiroshima 730-8670 (JP)
(74) Representative: Müller-Boré & Partner Patentanwälte

(57) **Abstract**

A foaming molten resin (R) containing reinforcement fibers and super critical fluid is injected into a cavity (23) with a short shot, the foaming molten resin (R) is made self-foam and flow in the cavity (23), and a volume of the cavity (23) is increased by expanding molds (21,23) so as to expand the foaming molten resin (R) in the cavity (23). During the expansion step, the expansion of the foaming molten resin (R) is assisted by gas vent, vacuum suction, partial pressure adding with gas or resin, or a spring back force of the reinforcement fiber in the foaming molten resin (R). Accordingly, there can be provided a resin foam molded article that has no improperly large air voids therein, a sufficient volume expansion thereof, and a superior transferability function.

## Description

The present invention relates to a molding method and apparatus of a resin molded article, particularly relates to a molding method and apparatus of a resin foam molded article.

A resin foam molded article may be used as a material of a door module carrier (a base plate of a door module) to form doors of an automotive vehicle for pursuing a light weight, high rigidity, low costs, improvement of door shut sound, or the like. Japanese Patent Laid-Open Publication No. 7-9461 discloses a conventional foaming resin molding in which a thermally-foamable thermoplastic resin is injected into a cavity formed by a mold equipped with a vacuum suction passage so that the cavity can be filled up fully with the resin, and a cavity volume is increased by a vacuum suction right after a skin layer has been formed on a molded article, so that the foaming resin can be foamed. Herein, this publication also discloses foaming agents such as azodicarbonamide, that generates gas with thermal resolution or condensation. Namely, this is a chemical injection foam molding (a molding method of using gas generated by a chemical reaction of a molten resin containing a chemical foaming agent). Also, it discloses an injection expansion molding in which the molten resin is injected into a mold and the mold is moved back (a so-called core back) while the resin still keeps its molten state, so that the volume of the molded article can be increased.

Meanwhile, Japanese Patent Laid-Open Publication No. 2003-39517 discloses a resin molding in which a gas-generating agent is supplied into a resin material containing a synthetic resin and an inorganic fiber, a pair of molds is compressed after this resin material is injected with a short shot (hereinafter, an "injection with a short shot" generally means an injection in which a relatively small amount of resin with respect to a theoretical full amount of resin to fill up a cavity where the resin is injected), a foaming molding with the core back is conducted after the full filling, and the resin material is expanded by using a reaction of the inorganic fiber. Herein, it is disclosed that carbon dioxide or nitrogen are directly supplied into the resin in a super critical state, in addition to that a steam or an organic foaming agent are used as the gas-generating agent. Namely, this is a so-called micro-cellular injection foam molding (a molding method of using the fluid in the super critical state, in which its temperature and pressure are reduced at injection)

Herein, the above-described chemical injection foam molding has a problem in that not only the large amount of foaming agent would be necessary due to its small foaming force, but it would be difficult to ensure a sufficient strength of the molded article due to occurrence of improperly large air voids caused by large foaming cell. Meanwhile, the injection expansion molding has a problem in that the volume increase of the molded article is limited to a certain extent, so a sufficient light weight of the molded article wound not be attained. And, in case of using both the chemical injection foam molding and the injection expansion molding like the molding disclosed in the above-described former publication, there is a problem in that air voids generated by the chemical foaming are coupled to each other due to the core back, so much larger air voids would occur at a central portion of the plate.

The micro-cellular injection foam molding, meanwhile, has a problem in that the density of the fluid in the super critical state (hereinafter, referred to as "super critical fluid") that is located at a surface layer of the molten resin would quickly change to a density of gas due to the injection of the molten resin into the mold, so that the pressure in the cavity would increase so quickly that the foaming of the resin could not become sufficient and the resin could not reach an end portion of the cavity fully, thereby causing deterioration of the flowing and transferability functions. Further, in the case where the molds are compressed after the injection with the short shot of the resin material like the molding disclosed in the above-described latter publication, the pressure in the cavity would be reduced further, so the foaming would become more insufficient and therefore the above-described problem of deterioration of the flowing and transferability functions would be enhanced.

Hereinafter, the above-described points will be described more in detail. For example, when the molten resin including the foaming agents is injected into the cavity, the foaming of the resin starts right after the injection. Herein, in the case where the mold is compressed after the injection like the molding disclosed in the above-described latter publication, it may be necessary to provide a clamping pressure (mold clamping force) that is greater than a pressure of the foaming gas generated in the foaming molten resin, so a lager energy would be required. Also, in the case of the micro-cellular injection foam molding using the super critical fluid, when the foaming molten resin is injected into the cavity the super critical fluid is generally released from the high temperature and high pressure state and then foams quickly. Therefore, in order to make the molten resin flow properly so as to reach the end portion of the cavity (full filling up) by compressing the mold before the competition of the foaming of the super critical fluid, the compression of the mold may be necessary to be controlled quickly, for example, within 1 second. This may be almost impossible. If the control of the compression was improper (the compression was delayed with respect to the quick foaming of the super critical fluid), the foaming cell would become too big and thereby the strength/rigidity of the molded article would deteriorate. Herein, the above-described latter publication has descriptions that the mold compression is started approximate 0.02 sec later than the injection completion and the mold compression is completed approximate 0.02 sec later (paragraph no. 0038). However, relationships between this timing control and the foaming start and completion of the foaming-gas is unclear.

The present invention has been devised in view of the above-described problems, and an object of the present invention is to provide a molding method and apparatus that can provide a resin foam molded article that has no improperly large air voids therein, a sufficient volume expansion thereof, and a superior flowing and transferability functions.

The above-described object is solved by the molding method and apparatus of a resin molded article according to the present invention of claims 1 and 9. Preferred embodiments of the present invention are subject of the dependent claims.

According to the present invention, there is provided a molding method of a resin molded article, in which a foaming molten resin is injected into a cavity of a mold device including at least first and second molds that are operative to be relatively moved thereto to selectively open or close the cavity for molding the resin article, comprising:
an injection step of injecting the foaming molten resin containing a super critical inert fluid into the cavity; and
an expansion step of expanding a volume of the cavity by relatively moving at least one of the first and second molds to a specified location after said injection step,
whereby the foaming molten resin can be made self-foam and flow in the cavity so as to contact both cavity-forming faces of the first and second molds at least before said expansion step is complete, and the foaming molten resin (R) can be made expand in a state thereof substantially contacting the both cavity-forming faces of the first and second molds until said expansion step is complete,
wherein said expansion step includes at least one expansion assisting step of assisting the expansion of the foaming molten resin by an expansion assist means.

Accordingly, there can be provided a resin foam molded article that has no improperly large air voids therein, a sufficient volume expansion thereof, and a superior transferability function.

According to a preferred embodiment of the present invention, there is provided a molding method of a resin molded article, in which a foaming molten resin is injected into a cavity of a mold device including first and second molds that are operative to be relatively moved thereto to selectively open or close the cavity for molding the resin article, comprising an injection step of injecting the foaming molten resin containing a super critical inert fluid into the cavity with a short shot, and an expansion step of expanding a volume of the cavity by relatively moving at least one of the first and second molds to a specified location after the injection step, whereby the foaming molten resin can be made self-foam and flow in the cavity so as to contact both cavity-forming faces of the first and second molds at least before the expansion step is complete, and the foaming molten resin can be made expand in a state thereof contacting the both cavity-forming faces of the first and second molds until the expansion step is complete, wherein the expansion of the foaming molten resin is configured to be assisted by an expansion assist means.

Further, according to the present invention, there is provided a molding apparatus of a resin molded article, in which a foaming molten resin is injected into a cavity of a mold device including at least first and second molds that are operative to be relatively moved thereto to selectively open or close the cavity for molding the resin article, comprising an injection means operative to inject the foaming molten resin containing a super critical inert fluid into the cavity particularly with a short shot, an expansion means operative to expand a volume of the cavity by relatively moving at least one of the first and second molds to a specified location after an injection by the injection means, whereby the foaming molten resin can be made self-foam and flow in the cavity so as to substantially contact both cavity-forming faces of the first and second molds at least before the expansion of the cavity volume by the expansion means is complete, and the foaming molten resin can be made expand in a state thereof contacting the both cavity-forming faces of the first and second molds until the expansion of the cavity volume by the expansion means is complete, and an expansion assist means operative to assist the expansion of the foaming molten resin.

Herein, at the time the expansion of the cavity volume starts, the flow of the foaming molten resin may reach an end portion of the cavity or not. Any case may be acceptable. A case where the flow of the foaming molten resin does not reach the end portion of the cavity may be caused by a reduction of a self-foaming force of the foaming molten resin which stops a self-flowing of the foaming molten resin (a flowing of the foaming molten resin in the cavity due to the self foaming of the foaming molten resin) before its reaching the cavity end portion, a start of a core back of at least one of the first and second molds which occurs under the flowing of the foaming molten resin, or the like. In any case, it may be important that the foaming molten resin contacts the cavity-forming faces of the first and second molds before the core back is complete, so that the foaming molten resin can make its skein layer and the core back can be kept conducted in this state. To the contrary, in a case where, for example, the foaming molten resin contacts the cavity faces of the first and second molds after the core back is complete, it may take the foaming molten resin relatively long time to contact these faces and therefore its cooling may proceed to same extent, so that the transferability of the resin to the cavity-forming faces would deteriorate or some undesirable marks made by the self-foaming of the foaming molten resin would appear on the molded article.

Herein, according to the above-described, the foaming molten resin that has been injected into the cavity probably flows in the cavity due to the self-foaming of the super critical fluid. Thereby, the foaming molten resin can be injected with the short shot (namely, the foaming molten resin can be injected with a relatively small amount of foaming molten resin with respect to a theoretical full amount of foaming molten resin to fill up the cavity; in other words, when performing a "short shot" a considerably smaller amount of molten resin is injected into the cavity as compared to the cavity volume (theoretical full filling amount); accordingly, when performing a "short shot" a smaller amount of expandable molten resin is injected than a theoretical full filling amount (resin amount) given by cavity volume), so the weight of the molded article (product) can be made light properly.

Also, according to a preferred embodiment of the present invention, the foaming cell can be made fine properly due to the foaming of the super critical fluid according to decreasing of the temperature and pressure at the injection, thereby preventing improperly large air voids from being formed in the article. Further, since the expansion of the foaming molten resin is configured to be assisted, the contacting of the molten resin with the molds can be properly improved (namely, the molten resin can contact the molds easily and promptly). As a result, the transferability of the product can be improved.

Further, according to a preferred embodiment of the present invention, since the molten resin contains the super critical fluid, when the molten resin is injected into the cavity particularly with the short shot, the super critical fluid self-foams in the cavity and probably flows toward the end portion of the cavity (a stage before the core back). Herein, in the conventional way of the prior art, it was not easy for the molten resin to fill up the cavity eventually and properly at the short-shot injection of the foaming molten resin into the cavity (likewise, the stage before the core back). According the present invention, however, the molten resin fills up the cavity so properly that it can reach the end portion of the cavity, even though the amount of the molten resin is rather small (considerably smaller amount than the cavity volume) that could not provide a proper filling in the cavity according to the prior art. The prior art disclosed in the above-described latter patent publication controls the mount of the molten resin so that the molten resin can reach the end portion of the cavity and fill up the cavity properly when the mold contacts, which should be basically different from the present invention. Namely, according to the present invention, the relatively small amount of molten resin is injected into the cavity particularly with the short shot, which may not be generally enough to fill up the cavity properly compared to the cavity volume, and the expansion assist means is operated during the core back, so the appropriate foaming function can be obtained, like the case where the sufficiently enough amount of the molten resin was injected. Further, despite the small amount of molten resin being used, the number of the foaming cell can be properly increased and the foaming cell can be made properly uniform and fine by the self-foaming of the super critical fluid. Thus, this fine foaming cell structure can maintain the mechanical rigidity and strength of the molded article at a properly high level.

Herein, the expansion assist means may be preferably operated so as to assist the expansion of the foaming molten resin at the following preferable timing case. The first case is that it assists the expansion while flowing in the cavity due to the self-foaming. The second case is that it assists the expansion of the molten resin during the core back of the mold. Namely, although the proper filling of the cavity may be attained due to the self-foaming of the molten resin before the core back of the mold, the self-foaming function would deteriorate and the expansion of the molten resin would not be enough during the core back. The third case is that it assists the expansion of the molten resin during the core back, in addition to the expansion due to the self-foaming of the molten resin that still remains after the core back of the mold starts. Of course, the above expansion assist means may be implemented in part or fully concurrently.

According to an embodiment of the present invention, the expansion assist means is operative to exhaust gas that prevents the foaming of the foaming molten resin in the cavity outside the cavity. Thereby, the above-described effects of the present invention can be obtained in a simple way.

According to another embodiment of the present invention, the expansion assist means is operative to reduce a pressure in the cavity. Thereby, the foaming of the foaming molten resin can be promoted, and the transferability of the product can be improved by the pressure reduction and suction in the cavity.

According to another embodiment of the present invention, the expansion assist means is operative to add a pressure to the foaming molten resin from inside. Thereby, the transferability of the product can be improved, obtaining the effects of the present invention.

According to another embodiment of the present invention, adding the pressure to the foaming molten resin from inside is executed by supplying gas into the foaming molten resin. Thereby, mechanical properties of the article, such as strength and rigidity, can be improved, obtaining an effect of the above-described embodiment.

According to another embodiment of the present invention, adding the pressure to the foaming molten resin from inside is executed by supplying a molten resin into the foaming molten resin. Thereby, functionality of the article, such as resilience and flexibility, can be improved, obtaining the effect of the above-described embodiment.

According to another embodiment of the present invention, the expansion assist means is operative to make the foaming molten resin contain a reinforcement fiber to operative to reinforce the resin molded article. Thereby, even in a case where the expansion of the foaming molten resin would become insufficient during the expansion stage after the self-foaming of the foaming molten resin is almost complete, a spring-back characteristic of the reinforcement fiber contained in the foaming molten resin can prevent the expansion of the foaming molten resin from becoming insufficient during the expansion stage.

According to another embodiment of the present invention, a content of the super critical inert fluid with respect to the foaming molten resin is about 0.5 wt% and more and/or about 3. 0 wt % or less. Thereby, the proper flowing of the molten resin can be maintained regardless of containing the super critical fluid, and any improper deformation of the molded article, which may be caused by an excessive amount of the super critical fluid, can be surely prevented.

Other features, aspects, and advantages of the present invention will become apparent from the following descriptions which refers to the accompanying drawings.
**FIG. 1A, 1B** and **1C** are schematic entire diagrams showing a structure and operation of a molding apparatus according to an embodiment of the present invention; FIG. **1A** shows an injection step; FIG. **1B** shows a flowing step; and FIG. **1C** shows an expansion step with an expansion assist.
FIG. **2** is a characteristic diagram explaining a characteristic of a super critical fluid used in the present invention.
FIG. **3A, 3B** and **3C** are schematic diagrams of a mechanism materializing an expansion assist operation that occurs during the expansion step of the present invention; FIG. **3A** shows a gas exhaustion mechanism; FIG. **3B** shows a suction mechanism; and FIG. **3C** shows a resin pressing mechanism.
FIG. **4** is a chart showing an example of molding conditions according to the present invention.
FIG. **5** is a chart showing particular constitution elements in forming a door module carrier of a molded article.
FIG. **6A, 6B** and **6C** are enlarged sectional views for explaining problems of the extension assist operation by a gas pressure or a resin pressing.
FIG. **7** is an enlarged sectional view for explaining relationships between an injection complete timing (t2) of the molten resin and a foaming-gas release starting timing (t1, t3) of the super critical fluid from the molten resin.
FIG. **8** is a chart of major molding conditions of an embodiment of the present invention.
FIG. **9** is a chart of major determination standards of the embodiment of the present invention.
FIG. **10** is a chart showing molding results in case of using a gas exhaustion mechanism as an expansion assist means.
FIG. **11** is a chart showing molding results in case of using the gas exhaustion mechanism with increasing an expansion ratio.
FIG. **12** is a chart showing molding results in case of using a suction mechanism as the expansion assist means.
FIG. **13** is a chart showing molding results in case of using a resin pressing mechanism with gas as the expansion assist means.
FIG. **14** is a chart showing molding results in case of using a resin pressing mechanism with molten resin as the expansion assist means.
FIG. **15** is a chart showing molding results in case of using a pressure reduction of mold clamping as a self-foaming assist means that is operated during the flowing step of a preferred embodiment the present invention.
FIG. **16** is a chart showing molding results in case of using nitrogen and carbon dioxide as super critical fluid.
FIG. **17** is a comparative chart showing respective foaming results of a door module carrier that was molded by a conventional molding method without the expansion step and the expansion assist and the one that was molded by a molding method with the expansion step and the expansion assist according to a preferred embodiment of the present invention.
FIG. **18** is a comparative graph showing respective rigidity of an molded article that was molded by using a chemical foaming agent and the one that was molded by using the super critical fluid in a resin foaming method.
FIG. **19** is a chart showing molding results of a case where content of the super critical fluid is changed.

Hereinafter, preferred embodiments of the present invention will be described referring to the accompanying drawings. It should be understood that even though embodiments are separately described, single features thereof may be combined to additional embodiments.

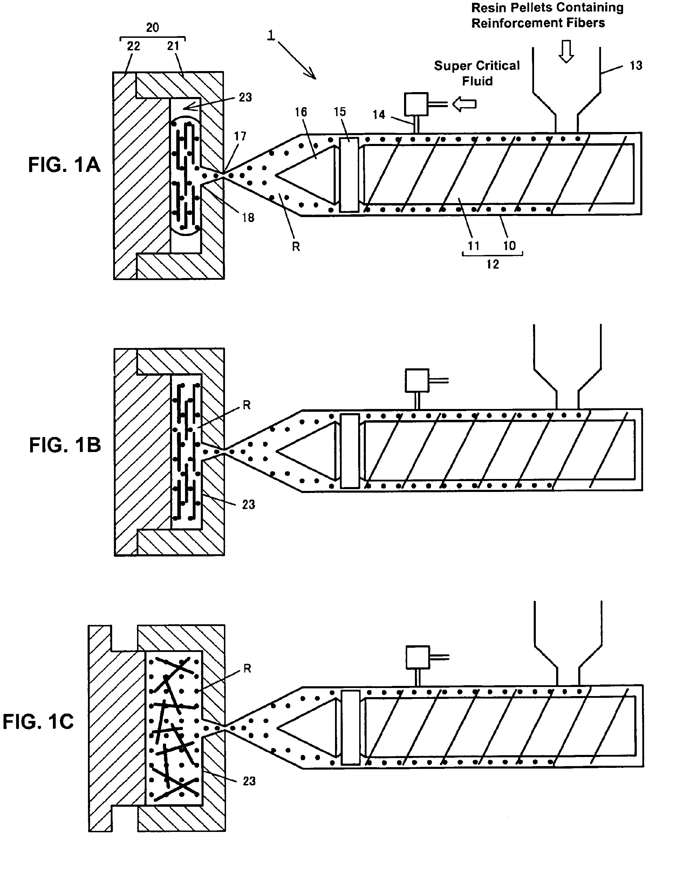

FIG. **1A**, **1B** and **1C** are schematic diagrams showing a structure and operation of a molding apparatus **1** according to the present embodiment. A screw feeder **12** (corresponding to a preferred injection means), which is well known, comprises a laterally-long cylinder **10** and a screw shaft **11** (as a preferred conveying device). A hopper **13,** from which raw material such as resin pellets and reinforcement fibers for reinforcing a resin molded article are input or threw in, is provided near a starting end portion of the screw feeder **12.** A supply pipe **14** of a super critical fluid is connected to a portion of the screw feeder **12** near its terminal end portion. A gas accumulator of inert gas, such as nitrogen (N₂) or carbon dioxide (CO₂), is coupled to an upstream portion of the supply pipe **14** via a generator/supply device of the super critical fluid, not illustrated. A tip end of the screw shaft **11** is equipped with a check ring **15** and a cone-shaped head **16.** A tip end of the cylinder **10** is also formed in a cone or converging shape and connected to a stationary mold **21** of a mold device **20** via a nozzle **17.** Between the stationary mold **21** and a movable mold **22** of the mold device **20** is formed a cavity **23** to substantially shape a molded article having a specified (predetermined or predeterminable) configuration or shape. A valve gate **18** leading to the nozzle **17** is open to the cavity **23.** Herein, a passage from the nozzle **17** to the valve gate **18** preferably forms a hot runner (particularly having one or more channels for distributing the molten raw material at least partly within the mold device **20** and particularly being either of the internal or of the external heated type), and the mold device **20** includes a mold clamping mechanism and injection compression/expansion mechanism. The molding apparatus **1** includes a controller to control a part or a substantially entire operation of the device, not illustrated.

According to the operation of the molding apparatus **1** controlled by the above-described controller, at first a foaming molten resin **R** containing the reinforcement fibers and super critical fluid is at least partly injected into the closed cavity **23** of the mold device **20** (injection step), as shown in FIG. **1A**. Subsequently, the injected molten resin **R** self-foams (or starts a self-foaming process) according to decreasing of the temperature and/or pressure, and flows so as to substantially reach an end portion of the cavity **23** and fill up the cavity **23** (flowing step), as shown in FIG. **1B.** Herein, although the illustration shows a state where the cavity **23** is filled up fully with the molten resin **R,** the molten resin **R** may not necessarily need to reach the end portion of the cavity 23 substantially fully as described above.

Subsequently, as shown in FIG. **1C,** the movable mold **22** moves back to a specified (predetermined or predeterminable) location, thereby the volume of the cavity **23** increases (corresponding a preferred expansion means) by a specified (predetermined or predeterminable) amount. As a result, the reinforcement fibers (shown by a bolt line) in the molten resin **R** that substantially is still in the molten state rise due to their resilient recovery force (i.e. due to a phenomenon that, when molten resin including one or more reinforcing fibers is injected into the cavity and the mold is retracted (core back) while the inside is still in a molten state, the reinforcing fibers inside stand up or deflect by their resilient recovery forces; this phenomenon is also referred to as "springback characteristic"). According to this spring-back or resilient recovery characteristic of the reinforcement fibers (this is a preferred function of an expansion assist means) and the foaming of the resin **R,** the molten resin **R** expands in the cavity **23** so that an apparent volume of the molded article increases (expansion step). Further, additional expansion assist operations to assist the expansion of the molten resin **R,** which will be described later, are or may be conducted during the expansion step. As a result, the growth of the foaming cell is controlled so that the molded article particularly with the properly fine and uniform foaming cell structure can be made eventually.

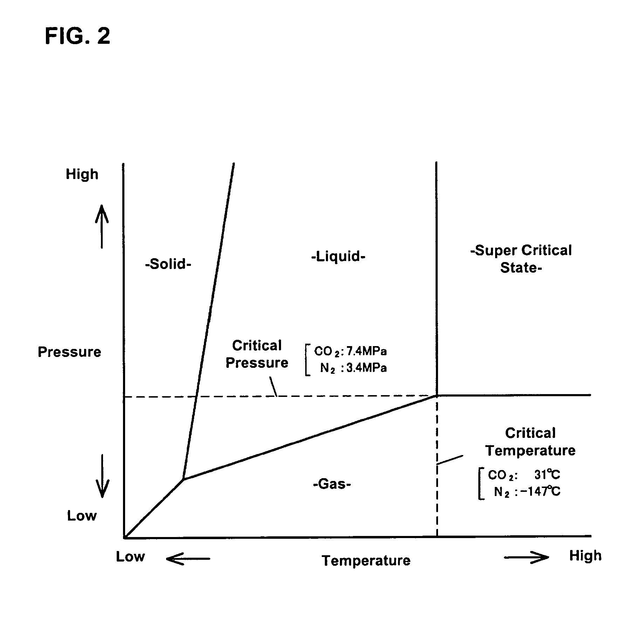

Herein, as shown in FIG. **2,** the super critical fluid is a fluid that is in a state where the temperature and pressure of the fluid exceeds respectively the critical temperature and/or pressure that allow the at least partial coexistence of gas and liquid. The critical temperature is 31°C for carbon dioxide and -147°C for nitrogen. The critical pressure is 7.4 MPa for carbon dioxide and 3.4 Mpa for nitrogen. The super critical fluid particularly has its density that is approximately equal to that of liquid and its flowing characteristic that is similar to that of gas. Accordingly, the super critical fluid moves actively in the molten resin and expands/permeates into resin molecules more uniformly, so it can be proper cores for the fine foams.

The above-described expansion assist operation shown in FIG. **1C** can be achieved by at least one of
(i) a gas exhaustion operation in which gas preventing the foaming of the foaming molten resin **R** in the cavity **23** is at least partly exhausted outside the cavity **23,**
(ii) a suction operation in which a pressure in the cavity is reduced, and
(iii) a resin pressure adding operation in which a pressure is added to the foaming molten resin R from inside.

Herein, the resin pressure adding operation may be achieved by (A) a gas supply operation in which gas is supplied into the foaming molten resin **R,** (B) a resin supply operation in which any molten resin having the same or different kind/composition is supplied into the foaming molten resin **R,** or the like.

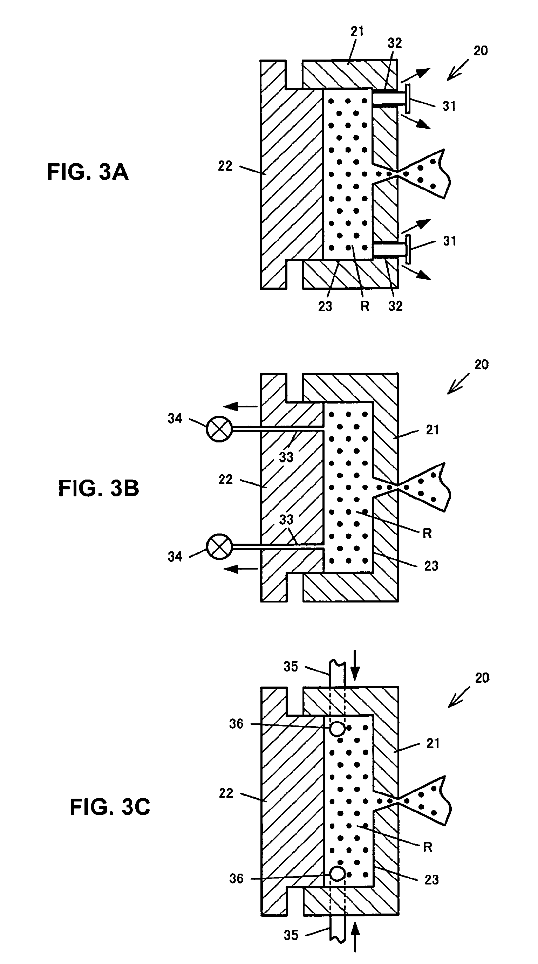

The gas exhaustion operation (i) may be materialized by using a gas vent shown in FIG. **3A.** The gas vent is generally provided preferably by utilizing a split face of the mold, a peripheral edge portion of the molded article that is away from the valve gate, a portion of a surface of the molded article that may have a weld line, a bolt fastening portion, a service hole portion, or a high boss or rib. The figure shows an exemplified structure in which there are provided one or more ejector pins **31** operative to push the molded article from the mold after cooling and pin holes **32,** and the gas is released (exhausted) outside the mold device **20** through clearances formed between the pins **31** and the holes **32** as shown by arrows.

The suction operation (ii) may be materialized by using a vacuum suction device shown in FIG. **3B.** The figure shows a structure in which suction passages **33** are formed at the movable mold **22** and the pressure in the cavity **23** is reduced by operating a vacuum pump **34.** This may be superior in providing a proper transferability of the resin to the cavity **23,** compared to the above-described gas vent. Also, a location of the suction passages **33** particularly is more appropriate than the gas vent because the periphery edge portion of the molded article, bolt fastening portion, service hole or the like may not be improperly conspicuous.

The resin pressure adding operation (iii) may be materialized by using a partially pressure adding device shown in FIG. **3C**. The figure shows a structure in which a gas supply pipe **35** (in case of the above-described case (A)) or a molten resin supply pipe **35** (in case of the above-described (B)) are coupled to inlet ports **36** that are open in the inner face (cavity foaming face) of the stationary mold **21.** Herein, the inert gas and/or the molten resin are supplied into the foaming molten resin **R** of the molding material, as shown by arrows in the FIG. 3C, so that preferably a pressure is added partially to a flow end portion of the molten resin **R** from inside and thereby the surface layer or the skin layer of the resin **R** are pressed against the surface of the cavity **23.**

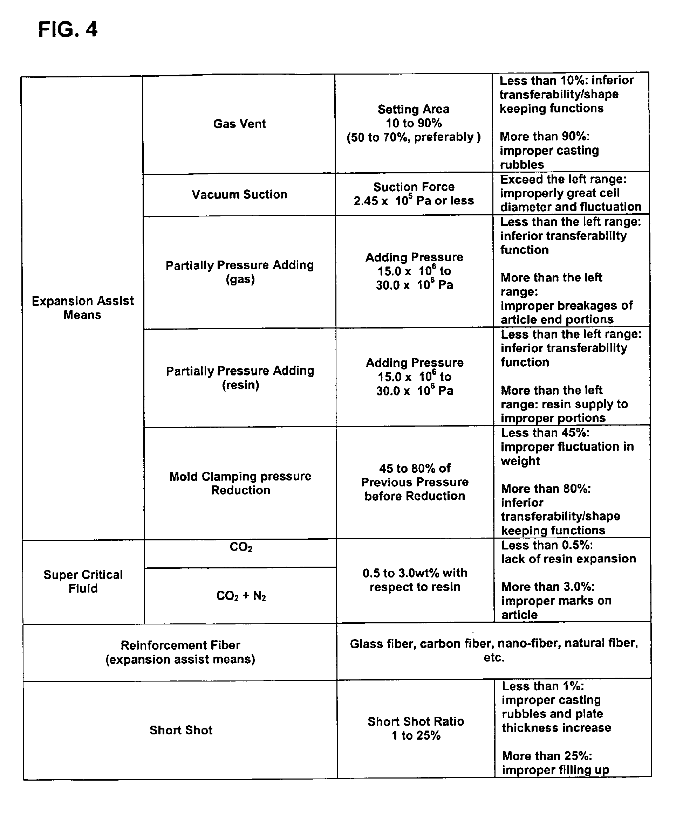

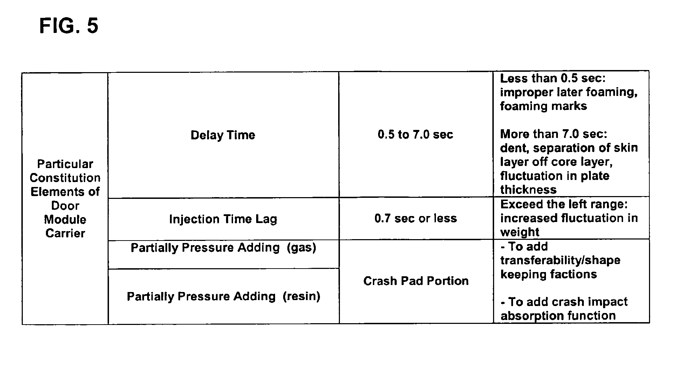

FIG. **4** is a chart showing an example of molding conditions according to a preferred embodiment of the present invention. FIG. **5** is a chart showing particular constitution elements in forming a door module carrier of the molded article. As shown in FIG. **4,** in the case where the gas vent shown in FIG. **3A** is applied as the expansion assist means, it is preferable that its setting area be set to be about 10 to about 90% of an area of its peripheral portion. Accordingly, it is possible to obtain an improvement in the transferability function and/or shape keeping function and to particularly avoid improper casting rubbles. It is more preferable that it be set to be about 50 to about 70%.

In the case where the vacuum suction shown in FIG. **3B** is applied as the expansion assist means, it is preferable that a suction force be set to be about 245 KPa or less. Accordingly, it can be advantageously avoided that the diameter of the foaming cell or fluctuation in the foaming cell diameter becomes improperly great.

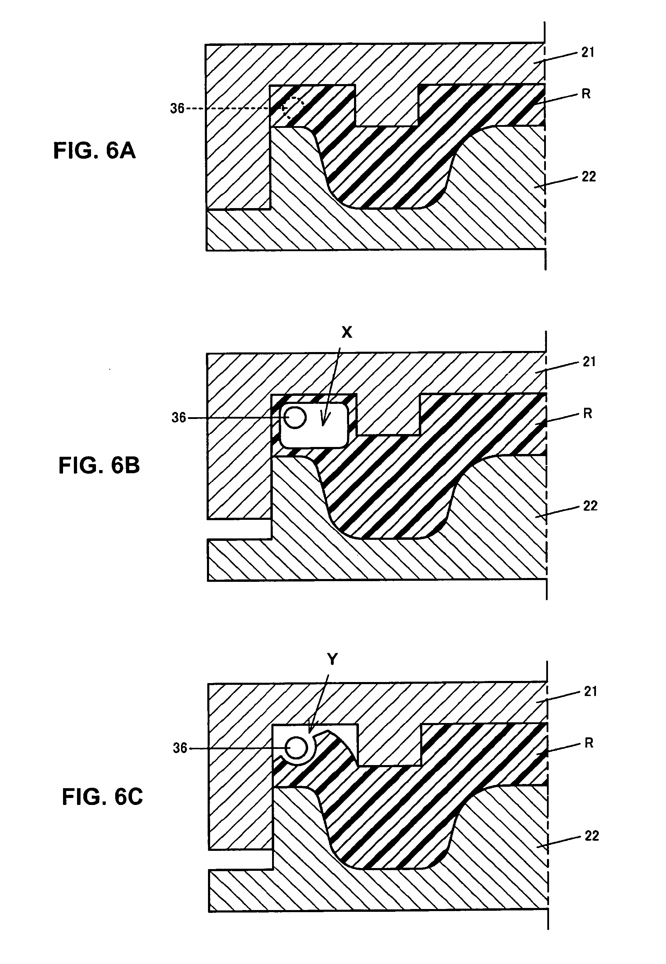

Further, in the case where the partial pressure adding by the gas or molten resin shown in FIG. **3C** is applied as the expansion assist means, it is preferable that the added pressure be set to be about 15. 0 to about 30.0 MPa. Accordingly, an improper breakage of end portions of the molded article can be advantageously avoided in case of the gas pressure adding, and/or it can be avoided that the resin is supplied to improper portions of the molded article in case of the molten-resin pressure adding. For example, as shown in FIG. **6A,** the inlet ports **36** preferably is formed at a specified (predetermined or predeterminable) portion of the stationary mold **21** that substantially corresponds to the end portion of the foaming molten resin **R** filled in between the stationary mold **21** and the movable mold **22.** Herein, if the added pressure of the gas or resin is appropriate, as shown in FIG. **6B,** the gas or resin (denoted by a reference character **X)** supplied into the molten resin **R** via the inlet port **36** presses the end portion of the molten resin **R** against the surface of the cavity **23** from inside, thereby improving the transferability function and the shape keeping function of the molten resin. Accordingly, it can be advantageously avoided that the gas or resin (denoted by a reference character **Y)** supplied into the molten resin **R** breaks part of the surface layer or the skin layer of the molten resin **R,** so that problems, such as the breakage of the end portion of the molded article, the deterioration of the shape keeping function, substantially cannot occur. Furthermore, the transferability of the molten resin **R** is advantageously maintained. Namely, since a remaining pressure of the molten resin **R** after the injection into the cavity **23** is still kept about 14.9 MPa, the added pressure that is below this pressure would not perform a proper effect of the expansion assist.

Returning to FIG. **4,** a mold clamping pressure reduction of the mold device **20** may be effective as another expansion assist means. This is particularly to promote (assist) the self-foaming of the molten resin **R** during the flowing step shown in FIG. **1B.** Herein, it is preferable that the reduced pressure of the mold clamping pressure be set to be about 45 to about 80% of the mold clamping pressure before the pressure reduction (namely, an original mold clamping pressure at the injection). Accordingly, fluctuation in weight of molded article can be advantageously avoided and/or transferability and shape keeping of the molded article can be maintained proper.

It is preferable that the inert gas, such as carbon dioxide or nitrogen, be applied as the super critical fluid for providing the fine foaming. Herein, the content of the super critical fluid is preferably about 0.5 to about 3.0wt% of the resin **R.** Accordingly, the foaming is advantageously sufficiently long and the expansion of the resin **R** is sufficient. On the other side, the foaming is maintained proper so that improper marks made by the foaming do no appear on the molded article Further, by limiting the content of the super critical fluid to about 0.5 to about 3.0wt% of the foaming molten resin **R,** the proper end-portion flowing of the resin **R** in the cavity **23** due to the super critical fluid can be ensured and any improper deformation of the molded article caused by the excessive amount of the super critical fluid can be surely prevented.

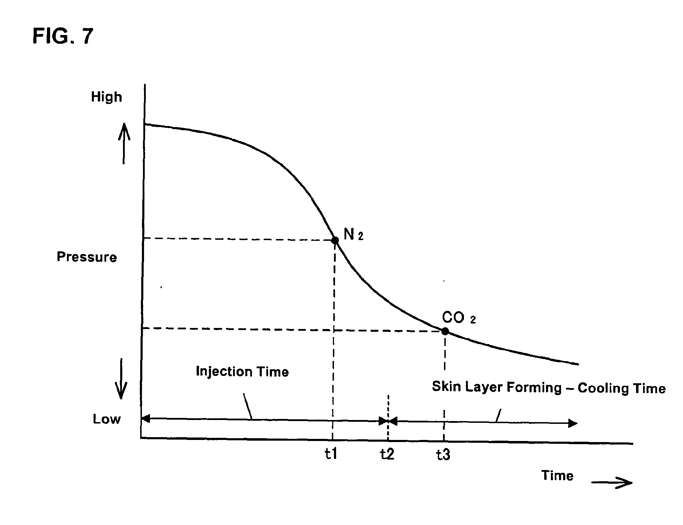

Generally, the carbon dioxide in the super critical state has characteristics that it is more soluble in the resin than the nitrogen in the super critical state and it can be easily released from the resin under a specified low pressure condition. Namely, it takes the carbon dioxide in the super critical state a longer time to be released from the resin than the nitrogen in the super critical state while the pressure goes down. By utilizing the characteristics, the above-described improper mark on the molded article can be prevented and its good appearance can be provided. Namely, as shown in FIG. **7,** the super critical fluid in the resin **R** starts becoming fine gas and self-foaming as the pressure of the molten resin **R** injected into the cavity **23** goes down. Accordingly, it is preferable to use carbon dioxide as the fluid in the super critical state. Herein, the nitrogen gas starts being released from the molten resin **R** at a relatively high pressure point (at early timing t1), but the carbon dioxide does not start being released from the molten resin **R** until a lower pressure point (at late timing t3). Accordingly, when an injection complete timing t2 of the molten resin **R** is later than the timing t1 and before the timing t3, many marks due to the release of the nitrogen gas would appear on the skin layer of the molten resin **R,** but few marks due to the release of the carbon dioxide gas would appear. Of course, if the injection complete timing t2 of the molten resin **R** is set to be earlier than the timing t1 of the nitrogen-gas release starting, the marks appearing on the molded article due to the nitrogen gas could be made few. Accordingly, by setting the injection complete timing (t2) of the molten resin properly according to the foaming-gas release starting timing (t1, t3) of the super critical fluid from the molten resin **R**, the improper mark on the molded article can be prevented and thereby its good appearance can be provided.

Returning to FIG. **4,** it may be preferable that glass fiber, carbon fiber, nanofiber, natural fiber, or the like be applied as the reinforcement fiber to be contained in the molten resin **R** with the super critical fluid. In this case, the longer the fiber is, the better the spring-back effect (the function of the expansion assist means) performs during the expansion step shown in FIG. **1C.**

Also, since the reinforcement fiber exists in the molten resin **R,** when the molten resin **R** self-foams, the foaming cell can be made properly fine (because the foaming cell of the super critical fluid is cut off properly by the reinforcement fiber that may not be deformed by the pressure of the foaming of the super critical fluid). And, when the resin molded article (product) is took out from the mold, the super critical fluid that remains in the molded article in its non-foaming state can be prevented from foaming at a later timing.

Herein, a short-shot ratio (i.e. a weight loss ratio of an actually injected resin amount as compared to the theoretical full filling amount of the cavity) at the injection step shown in FIG. **1A** may be preferably about 1 to about 25%. Accordingly, improper casting rubbles can be advantageously avoided and the molded article advantageously is formed having a substantially proper thickness. Furthermore, a sufficient filling of the resin **R** into the cavity **23** can be advantageously achieved.

Next, as shown in FIG. **5,** it is preferable that a delay time (the time from the injection of the molten resin **R** to the core back of the movable mold **22)** be set to be about 0.5 to about 7.0 sec in case of molding the door module carrier. Accordingly, it can be avoided that the later foaming of the super critical fluid occurs improperly and thereby many marks of the foaming can be advantageously avoided to appear on the molded article. Furthermore, by setting the delay time as above it can be avoided that a dent at the molded article is formed, a separation of the skin layer off a core layer (foaming layer) occurs, and/or that a fluctuation in thickness occurs.

It is preferable that an injection time lag (the time from an opening of the valve gate **18** to the injection of the molten resin **R)** be shorter than about 0.7 sec. Accordingly, the molten resin **R** injected later does substantially not have any difficulty in proceeding into the cavity **23** due to the foaming of the molten resin **R** that has been injected earlier, so fluctuation in weight of the molded article can be advantageously avoided. Moreover, the size of foaming cell of the molten resin **R** injected later does not become too big or a previous injection state due to the foaming of the molten resin in the hot runner (a passage from the nozzle **17** to the valve gate **18)** that has been injected earlier. As a result, the smooth flowing of the molten resin **R** in the cavity **23** can be advantageously obtained, so that a fluctuation in weight of the molded article substantially can be advantageously avoided.

It is preferable that the partial pressure adding with gas or resin be applied to a crash pad portion of the door module carrier. Because a proper crash absorption function can be further applied to the crash pad portion by the partial pressure adding with gas or resin, in addition to the proper transferability and shape keeping functions of the article mold. Namely, the crash pad portion is generally formed by a shock-absorption material such as urethane pad in a following step for meeting anticrash requirements, and this crash pad portion can be filled with the gas or resin supplied properly by the above-described partial pressure adding with gas or resin. Instead, another material such as elastomer may be also applicable for the same purpose.

As described, according to the present embodiment, since the foaming molten resin **R** injected into the cavity **23** flows in the cavity **23** preferably due to the self-foaming of the super critical fluid in the flowing step, the injection of the foaming molten resin with the short shot can be provided in the injection step. Also, even in a situation where the expansion of the foaming molten resin **R** would become insufficient in the expansion step due to the self-foaming of the foaming molten resin **R** occurring in the flowing step, the deterioration of the expansion of the foaming molten resin **R** preferably can be prevented properly by the spring-back characteristic (the function of the expansion assist means) of the reinforcement fiber containing in the resin **R.** Thereby, the weight of molded article (product) can be made lighter, the improperly large air voids can be prevented from being formed in the article, the sufficient volume increase of the molded article can be attained, and/or the foaming and the transferability functions of the molded article can be improved. Also, according to the present embodiment, even though the relatively small amount of the molten resin **R,** which could not fill up the cavity **23** that is in its state before the core back, is injected with the short shot and then the core back is conducted, the expansion of the foaming molten resin is assisted preferably by the expansion assist means when the core back is conducted, thereby providing the superior foaming function like the case where the molten resin **R** is injected so to fill up the cavity substantially fully. Further, despite using such a small amount of molten resin **R,** the number of the foaming cell can be properly increased and the foaming cell can be made properly uniform and fine preferably by the self-foaming of the super critical fluid. Thus, this fine foaming cell structure can maintain the mechanical rigidity and strength of the molded article at a properly high level.

Further, since the expansion of the foaming molten resin **R** preferably is assisted in the expansion step by exhausting the gas that may prevent the foaming of the foaming molten resin **R** in the cavity **23** outside the cavity **23,** the effect of the expansion assist means can be obtained in a simple way.

Also, since the expansion of the foaming molten resin **R** preferably is assisted in the expansion step by reducing the pressure in the cavity **23,** the foaming of the foaming molten resin **R** can be promoted, obtaining the effect of the expansion assist means, and the foaming of the foaming molten resin **R** can be promoted and the transferability of the molded article (product) can be improved by the pressure reduction and suction in the cavity **23.**

Further, since the expansion of the foaming molten resin **R** preferably is assisted in the expansion step by adding the pressure to the foaming molten resin **R** from inside, the transferability of the product can be improved, obtaining the effect of the expansion assist means.

Herein, in a case where adding the pressure to the foaming molten resin **R** from inside preferably is executed by supplying gas into the foaming molten resin **R,** mechanical properties of the article, such as strength and rigidity, can be improved, obtaining the above-described effect.

Also, in a case where adding the pressure to the foaming molten resin **R** from inside is executed preferably by supplying the molten resin into the foaming molten resin, functionality of the article, such as resilience and flexibility, can be improved, obtaining the above-described effect.

Since the content of the super critical fluid with respect to the foaming molten resin is about 0.5 wt% and more and/or about 3. 0 wt % or less, the proper flowing of the molten resin **R** can be maintained regardless of containing the super critical fluid, and any improper deformation of the molded article, which may be caused by an excessive amount of the super critical fluid, can be surely prevented.

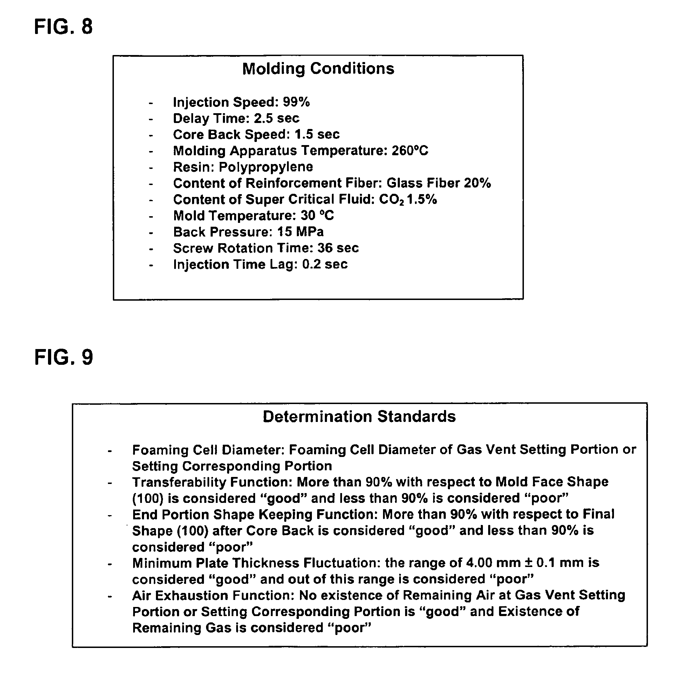

Trial manufactures of the door module carrier was conducted on molding conditions shown in FIG. **8** by changing various parameters. Then, the molded articles manufactured in that way was tested by using test standards shown in FIG. **9.**

### Trial Manufacture 1

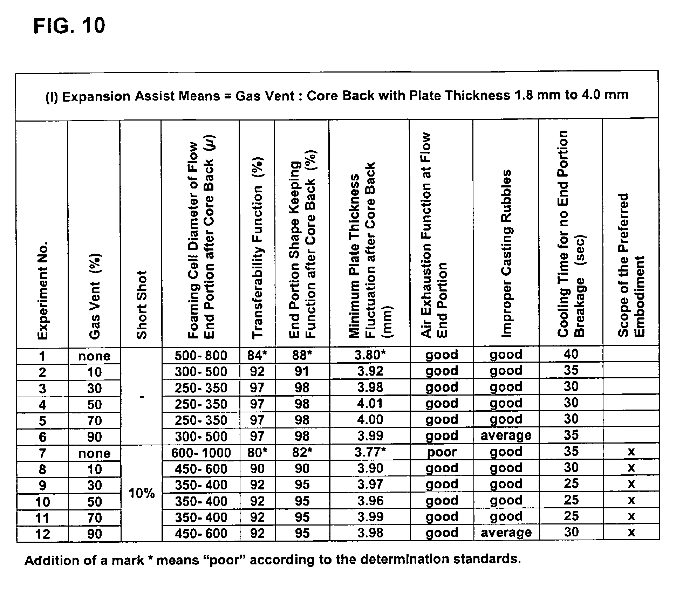

The gas vent was used as the preferred expansion assist means, and the thickness of a plate was expanded by approximate 2.2 times from about 1.8 mm to about 4.0 mm (experiment nos. 1 to 12). The results are shown in FIG. **10.** Herein, the experiments that correspond to preferred embodiments of the present invention are shown by a mark **"x"** (hereinafter, in the same way). Although some experimental samples falling into the scope of the present invention have inferior results, this is because such results are relatively changeable according to the test standards shown in FIG. **9** and other test standards. A "cooling time (sec) in case of no occurrence of the end-portion breakage" means a cooling time (sec) in the case where the end-breakage does not occur during the continuous molding. The shorter the cooling time is, the shorter the manufacturing cycle and therefore the better the productivity is. As apparent from the results shown in FIG. **10**, the trial manufactures of the preferred embodiment of the present invention showed superior characteristics, despite the short shot injection, in that the foaming-cell size was fine, the functions of transferability and shape keeping were superior, the plate pressure was narrowly distributed, the air-exhaustion function was good, few improper casting rubbles occurred, and the productivity was improved due to the short cooling time, which were equivalent to the case of the fully-filling injection.

### Trial Manufacture 2

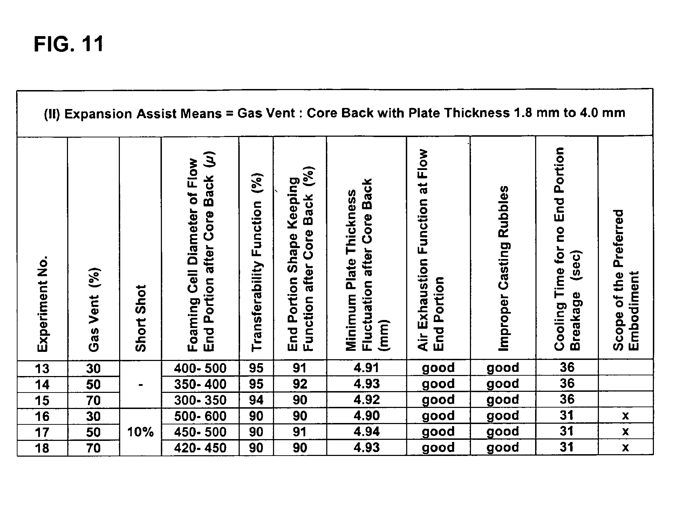

The gas vent was used as the preferred expansion assist means, and the thickness of the plate was expanded by approximate 2.8 times from about 1.8 mm to about 5.0 mm (experiment nos. 13 to 18). The results are shown in FIG. **11.** As apparent from the results shown in FIG. **11,** the trial manufactures of the present invention showed superior characteristics, like the results shown in FIG. 10, despite the short shot injection and the core back, which were equivalent to the case of the fully-filling injection.

### Trial Manufacture 3

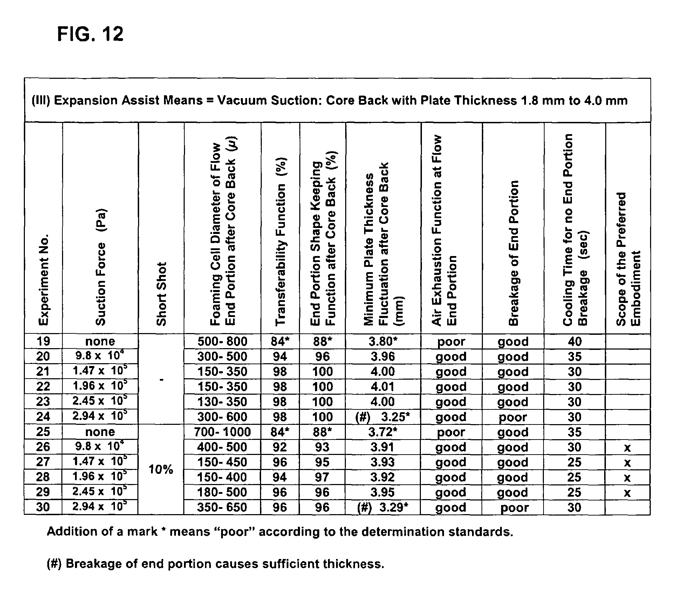

The vacuum suction was used as the preferred expansion assist means (until a completion of the core back after the injection of the foaming molten resin **R),** and the thickness of the plate was expanded by approximate 2.2 times from about 1.8 mm to about 4.0 mm (experiment nos. 19 to 30). The results are shown in FIG. **12.** As apparent from the results shown in FIG. **12,** the trial manufactures of the present invention showed superior characteristics, like the results shown in FIG. **10,** despite the short shot injection and the core back, which were equivalent to the case of the fully-filling injection.

### Trial Manufacture 4

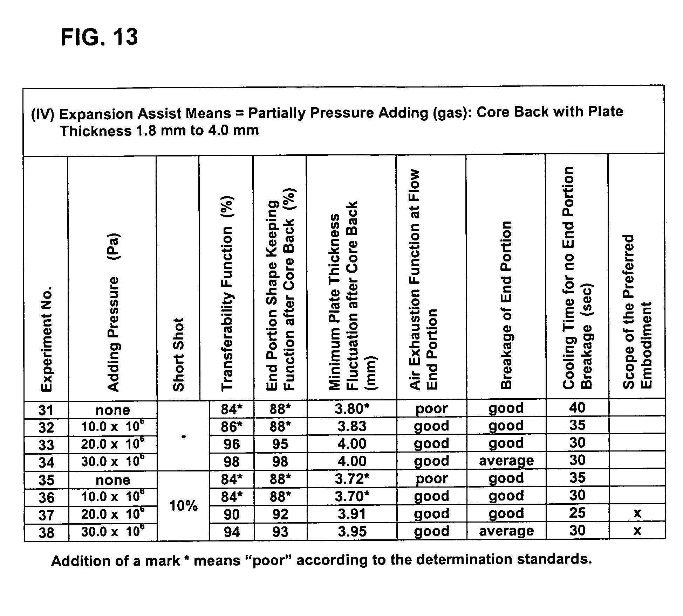

The partial pressure adding with gas was used as the preferred expansion assist means (until the completion of the core back after the injection of the foaming molten resin **R:** the pressure adding time is about 1 sec), and the thickness of the plate was expanded by approximate 2.2 times from about 1.8 mm to about 4.0 mm (experiment nos. 31 to 38). The results are shown in FIG. **13.** As apparent from the results shown in FIG. **13,** the trial manufactures of the present invention showed superior characteristics, like the results shown in FIG. **10,** despite the short shot injection and the core back, which were equivalent to the case of the fully-filling injection.

### Trial Manufacture 5

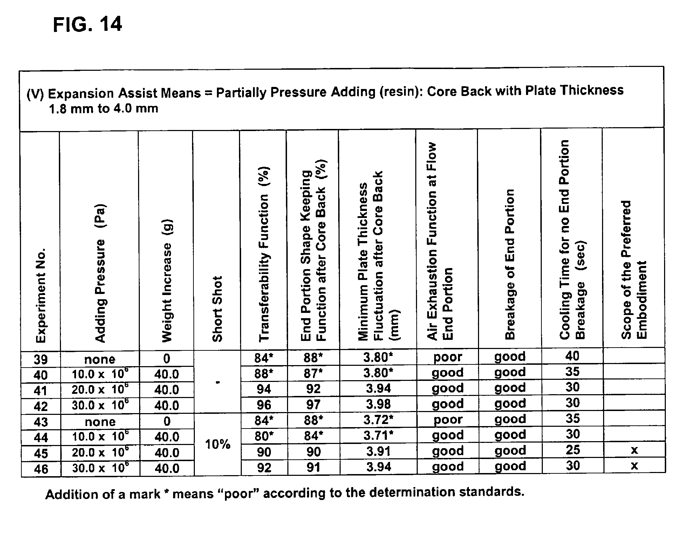

The partial pressure adding with resin was used as the preferred expansion assist means (until the completion of the core back after the injection of the foaming molten resin **R),** and the thickness of the plate was expanded by approximate 2.2 times from about 1.8 mm to about 4.0 mm (experiment nos. 39 to 46). The results are shown in FIG. **14.** As apparent from the results shown in FIG. **13,** the trial manufactures of the present invention showed superior characteristics, like the results shown in FIG. **10,** despite the short shot injection and the core back, which were equivalent to the case of the fully-filling injection.

### Trial Manufacture 6

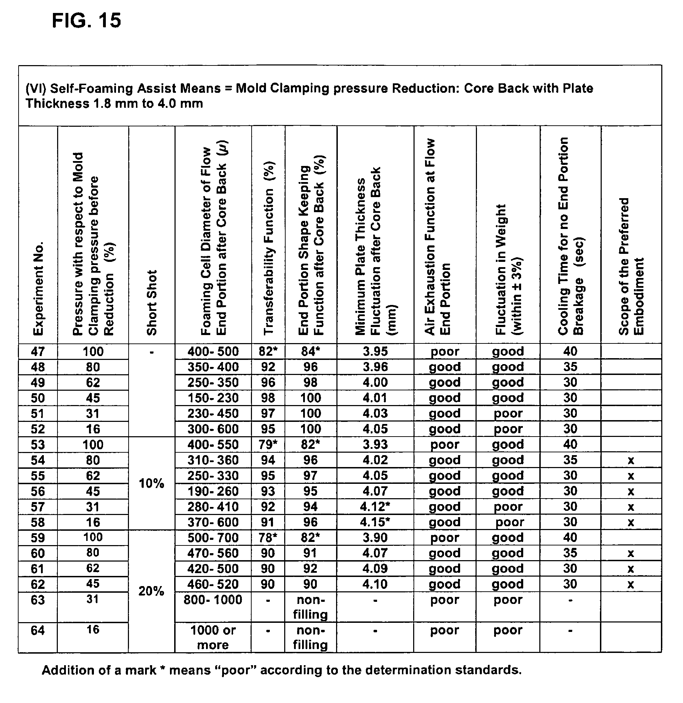

The mold clamping pressure reduction was used as the preferred expansion assist means (until the completion of the core back after the injection of the foaming molten resin **R),** and the thickness of the plate was expanded by approximate 2.2 times from about 1.8 mm to about 4.0 mm (experiment nos. 47 to 64). The results are shown in FIG. **15**. As apparent from the results shown in FIG. **15,** the trial manufactures of the present invention showed superior characteristics, like the results shown in FIG. **10**, despite the short shot injection and the core back, which were equivalent to the case of the fully-filling injection (except the experiment nos. 63, 64, which the short-shot ratio is relatively high and the pressure reduction ratio of the mold clamping is relatively high).

### Trial Manufacture 7

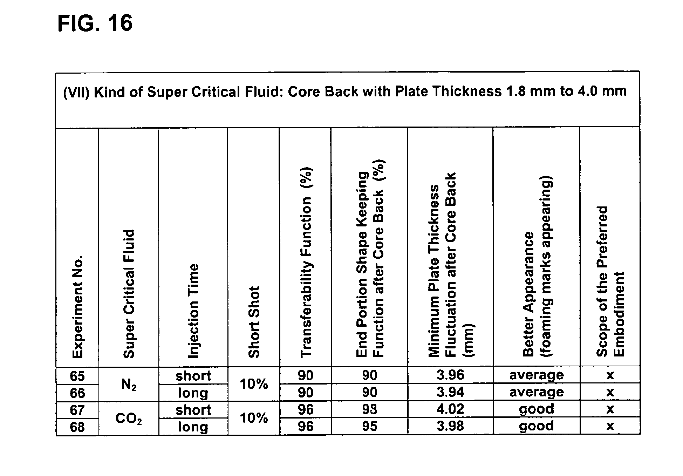

The nitrogen gas and carbon dioxide were used as the preferred super critical fluid (the content of those with respect to the foaming molten resin **R** is about 1.5wt%), and the thickness of the plate was expanded by approximate 2.2 times from about 1.8 mm to about 4.0 mm (experiment nos. 65 to 68). The results are shown in FIG. **16.** As apparent from the results shown in FIG. **16,** the trial manufactures of the present invention showed superior characteristics, like the results shown in FIG. **10,** despite the short shot injection and the core back, which were equivalent to the case of the fully-filling injection.

### Trial Manufacture 8

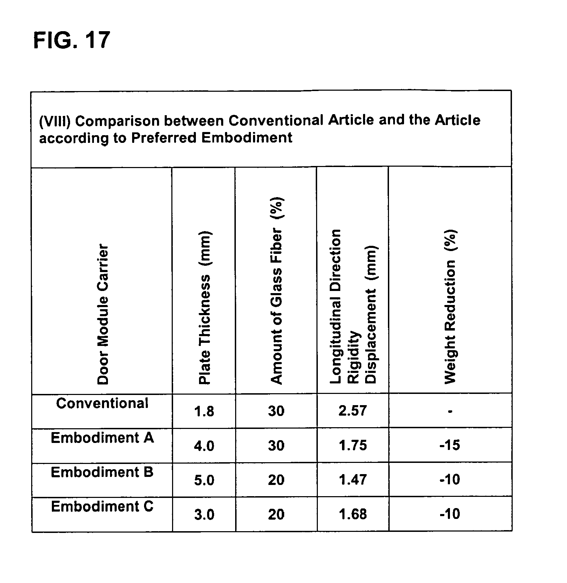

The conventional door module carrier (that was manufactured by the conventional molding method without the expansion step and the expansion assist) and the one according to the present invention (that was manufactured according to a preferred embodiment of the present invention molding method with the expansion step and the expansion assist) were compared. The results are shown in FIG. **17.** As apparent from the results, the door modules A, B and C according to the present invention showed more superior characteristics than the conventional one, despite the expansion of the plate thickness, in which their mechanical rigidity was superior and their weight was lighter.

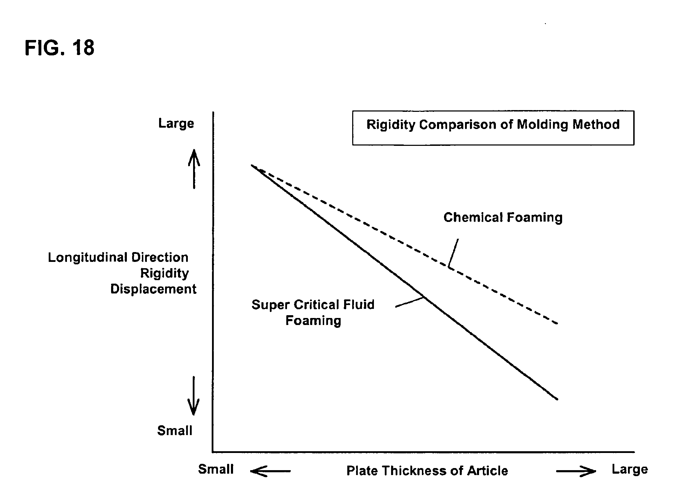

Further, the comparison of rigidity in a (vehicle) longitudinal direction of the molded article was conducted between a case where the door module carrier was molded with expansion by using the chemical foaming agent and a case where the door module carrier was molded with expansion by using the super critical fluid like the present invention. The results are shown in FIG. **18.** As apparent from the results, the foaming cell was fine in the case of the resin foaming by using the super critical fluid, while the foaming cell was improperly large in the case of the resin foaming by using the chemical foaming agent. Accordingly, the molded article manufactured with the super critical fluid had the greater mechanical rigidity than that of the one manufactured with the chemical foaming agent.

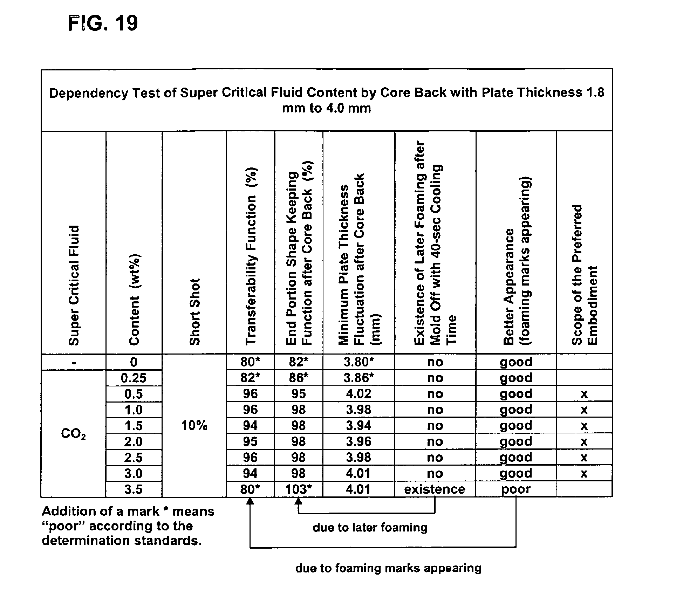

In addition, the molding results of a case where the content of the super critical fluid with respect to the molten resin **R** was changed variously within a range of about 0.25 to about 3.5wt% is shown in FIG. **19.** In the case where the content was about 0.25wt% and the super critical fluid was not contained, the functions of transferability, shape keeping and the plate pressure distribution were inferior. In the case where the content was about 3.5wt%, the functions of transferability, shape keeping, the later foaming and the better appearance were inferior. Accordingly, it is apparent that the preferable range of the content of the super critical fluid is about 0.5 to about 3.0wt%. The case of using the nitrogen gas as the super critical fluid showed the same results.

Accordingly, foaming molten resin **R** containing reinforcement fibers and super critical fluid is injected into a cavity **23** particularly with a short shot (a), the foaming molten resin **R** is made self-foam and flow in the cavity **23** (b), and a volume of the cavity **23** is increased by expanding molds **21, 23** so as to expand the foaming molten resin **R** in the cavity **23** (c). During the expansion step (c), the expansion of the foaming molten resin **R** preferably is assisted by gas vent, vacuum suction, partial pressure adding with gas and/or resin, and/or a spring back force of the reinforcement fiber in the foaming molten resin **R.** Accordingly, there can be provided a resin foam molded article that has no improperly large air voids therein, a sufficient volume expansion thereof, and a superior transferability function.

The present invention should not be limited to the above-described embodiments or trial experiments, and any other modifications and improvements may be applied within the scope of a sprit of the present invention.

The present invention can prevent the improperly large air voids from being formed in the article, increase the sufficient expansion of the article, and provide the superior article in the functions of molding and transferability. Also, the present invention can attain the uniform foaming cell by the super critical fluid, the stable dimension and plate thickness of the article, the properly small foaming cell size, and the increased foaming cell number. In addition, the contact of the molten resin to the mold can be improved and the functions of transferability and shape keeping can be superior. Also, for example, by the gas releasing from the cavity during the flowing of the molten resin, the prompt fully-filling of the molten resin can be attained and the foaming cell can be formed and dispersed further uniformly. As a result, the foaming force of the foaming cell can be generated further uniformly, the expansion of the molten resin can be assisted, the manufacturing cycle can be made shorter, and the productivity can be improved. Since the present invention can prevent the improperly large air voids forming, increase the sufficient expansion of the article, and prevent any deterioration of the functions of the flowing and transferability as described above, the present invention is applicable industrially and widely to any technical fields of the resin molding, especially foaming resin molding.

## Claims

1. A molding method of a resin molded article, in which a foaming molten resin **(R)** is injected into a cavity **(23)** of a mold device **(20)** including at least first and second molds **(21, 22)** that are operative to be relatively moved thereto to selectively open or close the cavity **(23)** for molding the resin article, comprising:
an injection step of injecting the foaming molten resin **(R)** containing a super critical inert fluid into the cavity **(23);** and
an expansion step of expanding a volume of the cavity **(23)** by relatively moving at least one of the first and second molds **(21, 22)** to a specified location after said injection step,
whereby the foaming molten resin **(R)** can be made self-foam and flow in the cavity **(23)** so as to contact both cavity-forming faces of the first and second molds **(21, 22)** at least before said expansion step is complete, and the foaming molten resin **(R)** can be made expand in a state thereof substantially contacting the both cavity-forming faces of the first and second molds **(21, 22)** until said expansion step is complete,
wherein said expansion step includes at least one expansion assisting step of assisting the expansion of the foaming molten resin **(R)** by an expansion assist means **(31, 32; 33, 34; 35, 36).**

2. The molding method of a resin molded article of claim 1, wherein said expansion assist means **(31, 32)** is operative to exhaust gas that prevents the foaming of the foaming molten resin **(R)** in the cavity **(23)** outside the cavity.

3. The molding method of a resin molded article of any one of the preceding claims, wherein said expansion assist means **(33, 34)** is operative to reduce a pressure in the cavity **(23).**

4. The molding method of a resin molded article of any one of the preceding claims, wherein said expansion assist means **(35, 36)** is operative to add a pressure to the foaming molten resin **(R)** from inside.

5. The molding method of a resin molded article of claim 4, wherein said adding the pressure to the foaming molten resin **(R)** from inside is executed by supplying gas into the foaming molten resin **(R).**

6. The molding method of a resin molded article of claim 4 or 5, wherein said adding the pressure to the foaming molten resin **(R)** from inside is executed by supplying a molten resin into the foaming molten resin **(R).**

7. The molding method of a resin molded article of any one of the preceding claims, wherein said expansion assist means is operative to make the foaming molten resin contain a reinforcement fiber to operative to reinforce the resin molded article.

8. The molding method of a resin molded article of any one of the preceding claims, a content of the super critical inert fluid with respect to the foaming molten resin **(R)** is about 0.5 wt% and more and about 3. 0 wt % or less.

9. A molding apparatus **(1)** of a resin molded article, in which a foaming molten resin **(R)** is injected into a cavity **(23)** of a mold device **(20)** including at least first and second molds **(21, 22)** that are operative to be relatively moved thereto to selectively open or close the cavity **(23)** for molding the resin article, comprising:
an injection means **(12)** operative to inject the foaming molten resin **(R)** containing a super critical inert fluid into the cavity **(23);**
an expansion means **(20)** operative to expand a volume of the cavity **(23)** by relatively moving at least one of the first and second molds **(21, 22)** to a specified location after an injection by said injection means **(12),**
whereby the foaming molten resin **(R)** can be made self-foam and flow in the cavity **(23)** so as to contact both cavity-forming faces of the first and second molds **(21, 22)** at least before the expansion of the cavity volume by said expansion means is complete, and the foaming molten resin **(R)** can be made expand in a state thereof substantially contacting the both cavity-forming faces of the first and second molds **(21, 22)** until the expansion of the cavity volume by said expansion means **(20)** is complete; and
an expansion assist means **(31, 32; 33, 34; 35, 36)** operative to assist said expansion of the foaming molten resin **(R).**

10. The molding apparatus of a resin molded article of claim 9, wherein said expansion assist means **(31, 32)** is operative to exhaust gas that prevents the foaming of the foaming molten resin **(R)** in the cavity **(23)** outside the cavity **(23).**

11. The molding apparatus of a resin molded article of claim 9 or 10, wherein said expansion assist means **(33, 34)** is operative to reduce a pressure in the cavity **(23).**

12. The molding apparatus of a resin molded article of claim 9, 10 or 11
wherein said expansion assist means **(35, 36)** is operative to add a pressure to the foaming molten resin **(R)** from inside.

13. The molding apparatus of a resin molded article of claim 12, wherein said adding the pressure to the foaming molten resin **(R)** from inside is executed by supplying gas into the foaming molten resin **(R).**

14. The molding apparatus of a resin molded article of claim 12 or 13, wherein said adding the pressure to the foaming molten resin **(R)** from inside is executed by supplying a molten resin into the foaming molten resin **(R).**

15. The molding apparatus of a resin molded article of any one of the preceding claims 9 to 14, wherein said expansion assist means is operative to make the foaming molten resin contain a reinforcement fiber to operative to reinforce the resin molded article.
